# EUROPEAN PATENT APPLICATION

(11) **EP 4 431 732 A1**
(43) Date of publication of application: **18.09.2024**
(21) Application number: 23161380.3
(22) Date of filing: 13.03.2023
(51) Int. Cl.: F03D 17/00

(54) **WIND TURBINE WITH LEAKY FEEDER BASED BEAM STEERING, AND METHOD OF CALIBRATION**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

There is described a wind turbine (1) comprising:
a tower (2);
a nacelle (3), coupled to the tower (1);
a wind rotor (5), which is arranged at the nacelle (3), and
which comprises at least one blade (4); and
an evaluation device (100), comprising:
i) a transmitting leaky feeder (110), coupled to a transmitter (111), and configured to transmit an electromagnetic signal;
ii) a receiving leaky feeder (120), coupled to a receiver (121), and configured to receive a reflection of the electromagnetic signal;
iii) a further leaky feeder (130), coupled to a communication associated device (131, 133), and configured to transmit and/or receive a further electromagnetic signal; and
iv) a processing device (150), configured to adapt the phase and/or the amplitude of at least one of the signal and the further signal, to thereby steer a signal beam (165) that results from interference of the signal and the further signal, and

perform an evaluation operation based on the steering of the signal beam (165).

## Description

### Field of invention

The present invention relates to a wind turbine comprising a tower, a nacelle, a wind rotor with at least one blade, and an evaluation device, which comprises several leaky feeders. The invention also relates to a method of performing an evaluation operation with respect to the wind turbine. Thus, the present invention may relate to the technical field of wind turbines.

### Art Background

A leaky feeder ("radiating cable") is a cable or waveguide that is "leaky" in that it comprises slots in an outer conductor layer, so that electromagnetic signals leak in and/or out through said slots along the entire length of the leaky feeder or parts of it. Accordingly, a leaky feeder can be especially interesting for applications, where signals should be transmitted/received along an extension, for example a tunnel, a mine, or a train.

Wind turbines can be considered as an important energy production source and it can be expected that their importance and distribution will grow more and more. Accordingly, there is constant research and development undertaken to further improve the functionality of wind turbines. An important aspect in this regard may be the inspection of the wind turbine blades, in particular during operation. In this respect, a leaky feeder application may be especially useful, for example by monitoring the blade(s) using one or more leaky feeder as antenna(s) of a radar functionality.

Yet, for some applications of the leaky feeder, a calibration (of the leaky feeder path) may be necessary. In the first place, a calibration should be done as a quality check, if there is a fault, damage or change of the leaky feeder. In further (advanced) applications, it may be required to accurately determine a length information and/or a phase information. In order to determine these information, a calibration of the whole configuration may be needed.

Such a calibration may be conventionally done by actively sending and/or receiving a signal. State of the art calibration procedures are sending a signal with one antenna (electromagnetic wave) and receiving the signal with another one.

### Summary of the Invention

There may be a need to evaluate (calibrate/inspect) a wind turbine functionality in an efficient and reliable manner. This need may be met by the subject matter according to the independent claims. Advantageous embodiments of the present invention are described by the dependent claims.

According to a first aspect of the invention, there is described a wind turbine comprising: a tower; a nacelle, coupled to the tower; a wind rotor, which is arranged at the nacelle, and which comprises at least one blade (in particular three blades); and an evaluation (calibration and/or inspection/monitoring) device, comprising:
i) a transmitting leaky feeder, coupled to a transmitter (unit), and configured to transmit an electromagnetic signal (wave or pulse),
ii) a receiving leaky feeder, coupled to a receiver (unit), and configured to receive a reflection of the electromagnetic signal,
iii) a further leaky feeder (e.g. a further transmitting leaky feeder or a further receiving leaky feeder), coupled to a communication associated device (e.g. a transmitter unit, a receiver unit, a termination, etc.), and configured to transmit and/or receive a further electromagnetic signal, and
iv) a processing device, configured to
   a) adapt (in particular trigger adaptation of) the phase and/or the amplitude of at least one of the electromagnetic signal and the further electromagnetic signal, to thereby steer (form) a signal beam that results from interference of the electromagnetic signal and the further electromagnetic signal, and
   b) perform an evaluation operation based on the steering of the signal beam.

According to a second aspect of the invention, there is described a method of performing an evaluation operation with respect to a wind turbine, the method comprising:
i) transmitting an electromagnetic signal by a transmitting leaky feeder,
ii) receiving a reflection (reflected at the blade) of the electromagnetic signal by a receiving leaky feeder,
iii) transmitting and/or receiving a further electromagnetic signal by a further leaky feeder,
iv) adapting the phase and/or the amplitude of at least one of the signal and the further signal, thereby steering a signal beam that results from interference of the signal and the further signal, and
v) performing the evaluation operation based on the steering of the signal beam (along the blade).

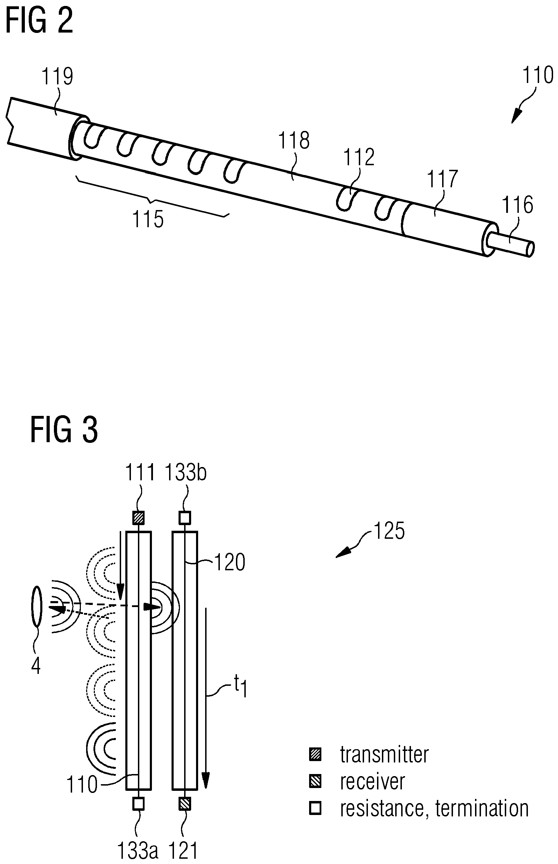

In the context of the present document, the term "leaky feeder" may in particular refer to an elongated structure that is configured as a transmitter and/or receiver of electromagnetic waves/pulses (signals), wherein the transmission/reception occurs at specifically defined slots/apertures (leaking). An exemplary embodiment of a leaky feeder is shown in Figure 2. The leaky feeder may be configured e.g. as a leaky coaxial cable, a leaky waveguide (in particular suitable at high frequencies), or a leaky stripline.

In an embodiment, the leaky feeder comprises a plurality of slots to allow an electromagnetic signal to leak out of the leaky feeder along its (entire or parts of) length. In a further embodiment, the leaky feeder comprises a plurality of slots to allow an electromagnetic signal to leak into the leaky feeder along its (entire) length. In the present document, the term "slot" may also include slot groups. In an embodiment, the slots/slot groups may be, regularly or irregularly distributed along the length of the leaky feeder.

In an embodiment, the leaky feeder is coupled/connected to at least one of a transmitter (unit), a receiver (unit), a termination (unit), see e.g. the example of Figure 3. Hereby, the leaky feeder may be configured to transmit the signal provided by the transmitter (unit) and/or to provide a received signal to the receiver (unit). A leaky feeder connected (in particular via an elongated conductor) to a communication-associated device may be seen as a leaky feeder path.

In the context of the present document, the term "elongated conductor" may in particular refer to a conductor with a main extension in one spatial dimension, which is much larger than the extension in the other two spatial dimensions, for example a cable. The elongated conductor may serve as an electric connector between the leaky feeder and a communication-associated device, such as a transmitter, a receiver, or a termination. Hereby, the exact length of the elongated conductor may not be known and may have to be calibrated. A leaky feeder path may be defined as a (signal) path through the leaky feeder and the connected elongated conductor.

In the context of the present document, the term "beam steering" (or "beam forming") may in particular refer to an established technique to control the phase and/or amplitude of transmitted signals in order to create a pattern of constructive and/or destructive interference in the wavefront. In an example, by manipulating the phase and/or amplitude of the transmitter, which is connected to a transmitting/receiving leaky feeder, it may be possible to form and change the beam (antenna pattern) of the whole configuration.

In the context of the present document, the term "evaluation operation" may in particular refer to any evaluation that may be done in the context of a wind turbine. Specifically, the evaluation may be done with respect to a wind turbine blade and/or a leaky feeder associated with the wind turbine. In an example, the evaluation may comprise a check or a calibration of one or more leaky feeder (paths). In another example, a blade may be inspected/monitored regarding faults. For example, a length information (e.g. length of the elongated conductor or length from a communication-associated device to the leaky feeder (via the elongated conductor), in particular to the first slot) may be determined. Furthermore, based on said length information, further calibration may be performed, for example phase angle and amplitude information may be determined, and phase shifts may then be calibrated, in particular for specific further applications like the beam steering and/or blade inspection/monitoring. In an example, a calibration is done in the first place and then the blade movement (and thereby the blade condition) may be tracked, in particular using AI and/or the beam steering.

In the context of the present document, the term "processing device" may in particular refer to any hardware and/or software suitable to perform the above described steps of steering a signal beam and performing an evaluation operation. The processing device may comprise one or more processors. In an example, the processing device may be implemented as one or more processing units in the calibration device or the wind turbine, respectively. In another example, the processing device may be located (at least partially) outside of the wind turbine and operate remotely.

According to an exemplary embodiment, the invention may be based on the idea that a wind turbine associated functionality may be evaluated (calibrated/inspected) in an efficient and reliable manner, when a plurality of leaky feeder based electromagnetic signals set to be interfering in a specific manner, so that a beam steering is enabled that can be used for the evaluation.

By adapting the amplitude and/or phase of an electromagnetic (wave) signal, the resulting antenna/signal beam of multiple leaky feeders can be changed and moved due to interferences of the multiple signals. The signal beam direction corresponds hereby to the direction of the antenna main lobe. The transmitted electromagnetic wave is then reflected by a wind turbine blade, which is preferably located in front of the tower (preferably the turbine is stopped during evaluation). The blade-reflected signal(s) is/are then received by another leaky feeder in receiving configuration, connected to a receiver.

On the one hand, this set-up may be used to perform a straightforward but reliable self-test of the system. The whole signal path from transmitter to receiver could be tested with this method. On the other hand, steering of the signal beam along the blade (in particular the edge or the tip) may be used to inspect the blade conditions.

While conventionally, there is used a direct coupling between antennas for calibration, the received signals are indirectly detected in the present case. Further, instead of calibrating the elongated conductor and the leaky feeder (in a leaky feeder path) separately, both may be efficiently calibrated together.

### Exemplary Embodiments

According to an embodiment, the evaluation operation further comprises: stopping rotation of the wind rotor, in particular of the at least one blade.

According to a further embodiment, the evaluation operation further comprises: aligning the at least one blade with the tower extension direction, in particular align the at least one blade in the vertical direction (z).

According to a further embodiment, the method further comprises: stopping a rotation of the wind turbine and/or aligning a blade of the wind turbine with the tower of the wind turbine.

These measures may provide the advantage that the blade is located directly in front of the transmitting feeder(s) (array), so that the evaluation may be done especially reliably. When the leaky feeder is arranged (at least partially) around the wind turbine tower, the described method may be independent of the yaw angle (nacelle position).

In an example, it can be important for the calibration that the turbine is stopped, and one blade is straightly pointing down in front of the tower. This could be confirmed by a blade position sensor, e.g. installed in the hub/nacelle (e.g. incremental encoder).

According to a further embodiment, the processing device is further configured to adapt the phase, so that the amplitude of the signal and/or further signal received at the receiver is maximized, in particular to determine the maximal amplitude to calibrate a focus point. In this manner, an efficient and accurate calibration may be provided for the leaky feeder path(s) .

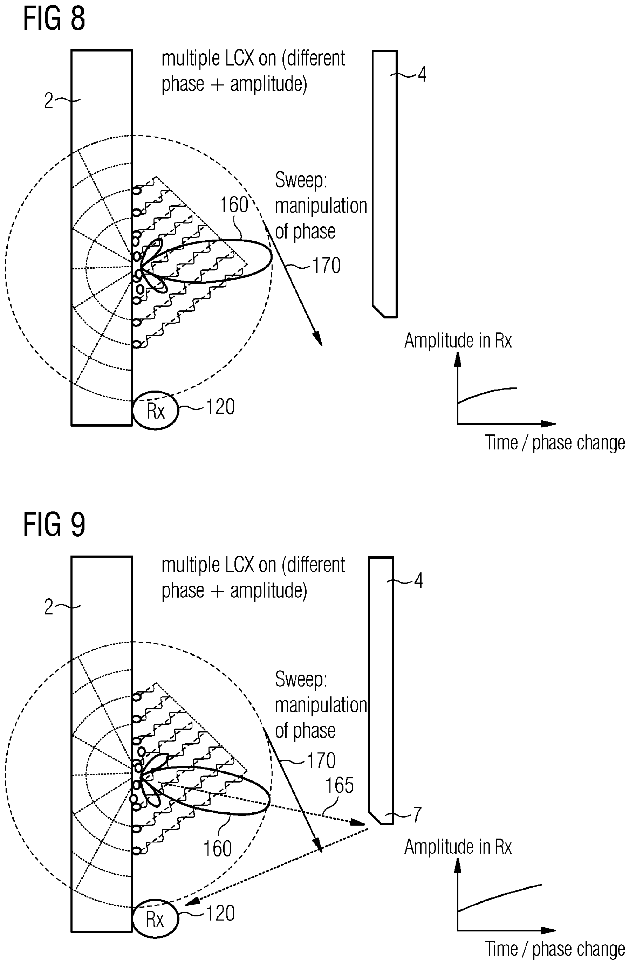

In an example, if the maximum amplitude is reached, the beam is focused on the blade. This may be the shortest path from transmitter to blade and back to receiver. The system can derive the position of the beam on the blade, see e.g. Figure 9.

According to a further embodiment, the processing device is further configured to steer the signal beam at least partially along the at least one blade. This may provide the advantage that an efficient and accurate inspection/monitoring of the blade may be provided together with a calibration of the leaky feeder path(s).

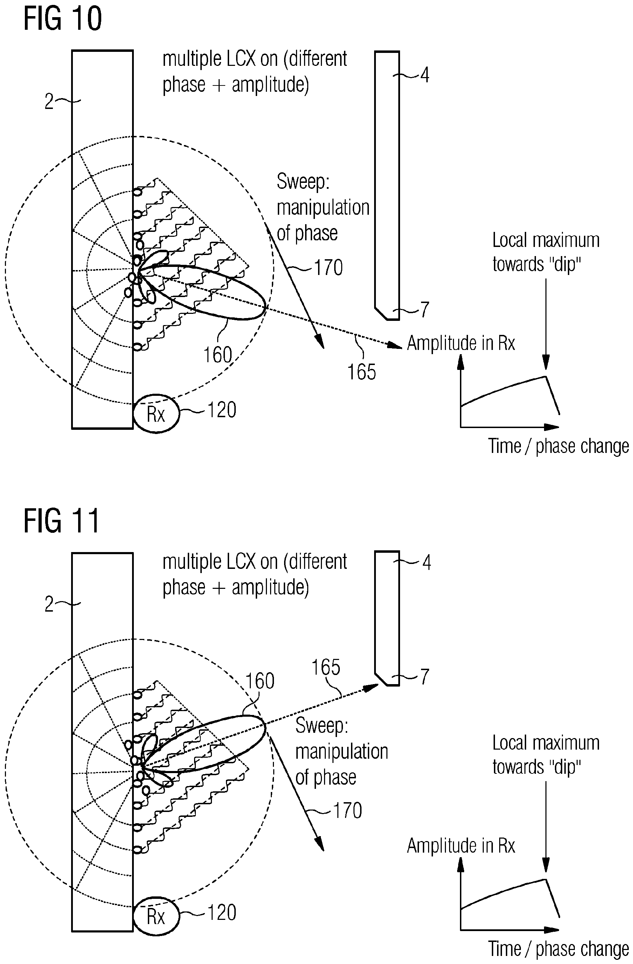

According to a further embodiment, the processing device is further configured to steer the signal beam over the tip and/or the edge of the at least one blade. Thereby, dimension, position, or quality of the blade may be directly evaluated. The edge and/or the tip may represent specific shapes, that may be easily detectable (see e.g. the example in Figures 9 and 10).

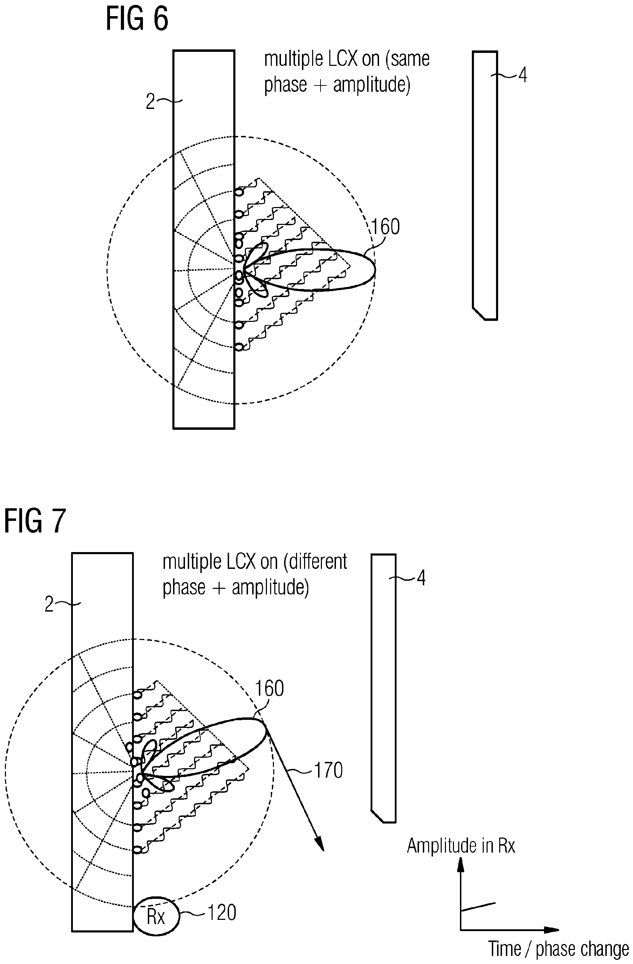

By manipulating the phase (or amplitude), it may be enabled to
sweep with the signal beam over the blade. The determination of the swiping direction could be detected, e.g. by sweeping over the blade tip. This can create a sharp edge (drop) in the amplitude diagram (see Figures 7 to 11). In this way, it may be possible for the system to detect the blade tip and/or blade edges. If the phases are manipulated in that way that the beam is moving towards the blade root, the amplitude will decrease smoothly, because some electromagnetic waves will be reflected by the blade. The position of the leaky feeder and the blade lengths are known, and therefore it may be possible to determine the exact position (angle) of the formed beam out of its horizontal (0°) and vertical position. After this calibration, it is possible to store those determined phase angles (-offsets) and use it to perform beamforming during operation.

According to a further embodiment, a phase shift functionality and/or an amplitude modulation functionality is implemented in the transmitter, in particular in software. According to a further embodiment, the wind turbine further comprising at least one phase shifter device and/or amplitude modulation device. In these configurations, established and reliable means may be directly applied to adjust the phase and/or amplitude.

According to a further embodiment, the processing device is further configured to keep the amplitude constant, when the phase is shifted. According to a further embodiment, the processing device is further configured to keep the phase constant, when the amplitude is modulated. Depending on the desired result, one of these two modes may be particularly advantageous.

According to a further embodiment, the communication-associated device comprises at least one of a further transmitter, a further receiver, a phase-shift device, an amplitude-modulation device. The term "communication-associated device" may in particular refer to a device suitable to take part in a signal communication, e.g. a transmitter or receiver, but not limited to these. In a preferred embodiment, a plurality of transmitting leaky feeders (e.g. arranged as an array) may be applied. Hereby, the further leaky feeder can be used as a transmitting leaky feeder, and the communication associated device can be a transmitter unit. In a specific example, one main transmitter and multiple phase shifting devices and/or amplitude modulators are used.

According to a further embodiment, the receiving leaky feeder is further configured to receive the further signal. In this embodiment, one receiver may be used to determine the signal and the further signal. In another example, a further receiver may be applied to receive the further signal.

In a first example, at least two transmitting leaky feeders and (at least) one receiving leaky feeder is used. In a second example, at least two receiving leaky feeders and (at least) one transmitting leaky feeder is applied.

In an embodiment, a leaky feeder may be configured as a transmitting leaky feeder and as a receiving leaky feeder (transceiver).

According to a further embodiment, the leaky feeder is at least partially located in the tower circumferential direction, in particular (bent) inside or outside of the tower. Thereby, the length extension of the leaky feeder may be exploited in an advantageous manner.

According to a further embodiment, the wind turbine further comprises an artificial intelligence (AI) module, in particular implemented (at least partially) in the processing device, configured to control or regulate the phase shift and/or the amplitude modulation. Using an AI based approach, the phase/amplitude adaption may be improved.

According to a further embodiment, the received signal is used as in input for the AI module. According to a further embodiment, the transmitted signal is an output of the AI module. According to a further embodiment, the AI module comprises a neural network, in particular with at least one hidden layer.

In the present context, the term "AI" (synonymously the term machine learning may be used) may refer to approaches to mimic cognitive functions of a human mind, in particular learning and problem solving. There have been developed a plurality of different mathematic algorithms and computational models to implement AI functionalities. These include for example neural networks (in particular deep learning), genetic algorithms, support vector machines, and kernel regression. The main purpose of these approaches may be seen in improving a present algorithm by training it using training data, so that a learning effect occurs and the problem solving ability of the algorithm improves over time. Accordingly, an AI algorithm may be applied to constantly improve the adaption of the phase/amplitude. Evolution of the AI algorithm may be accompanied by human interaction or may be completely automatic .

The calibration and/or beam formation could be controlled by artificial intelligence (artificial neural network, e.g. neural evolution). In an example, each phase shifting device (phase offset) of each transmitter is the output of the neural network and controlled by it. Input of the AI module is the, by the blade reflected and received, signal of the receiver (receiving leaky feeder)(amplitude). The AI module can be trained to change the phase of all transmitters in that way, that the highest amplitude could be received at the receiver. The amplitude of the received signal is increased by manipulating the phases. By adapting the phases, the AI module may learn to change the phases in a way, that the highest amplitude at the receiver is reached. The phase of each transmitter could be e.g. changed by e.g. +/- 90° or +180° - which has mathematically the same result. The phase shift could be done directly implemented by software in the transmitter or by an external phase shifting device (e.g. delay lines, circulator) connected to the transmitter.

According to a further embodiment, the evaluation operation relates to at least one of: distance between blade and tower, location of blade tip, location of blade edge, quality of blade, length of a leaky feeder conductor, a phase angle, the location of one or more leaky feeder slots, signal path test, position of signal beam on blade. This may provide the advantage that important operation parameter of a wind turbine can be evaluated (in particular during operation) in an efficient and accurate manner.

According to a further embodiment, the method further comprise: sweeping the signal beam along the wind turbine blade, in particular over the tip and/or the edge of the blade.

According to an exemplary embodiment, the advanced calibration, e.g. for phase calibration, is using multiple transmitting leaky feeders with the amplitude of all transmitter outputs being constant (it is also possible to perform the calibration with phase fixed and changing the amplitude). By (randomly) changing the phase (-offset) of each transmitter, the beam could be formed.

According to an exemplary embodiment, an inspection/monitoring of at least one blade is performed during (wind turbine) operation. Thereby, evaluation may be realized in an efficient manner also during operation. For example using the above described, AI it may be possible to track the blade movement and adapt the phases/amplitude in that way that the antenna main lobe (beam forming) is tracking the blade movement.

According to an exemplary embodiment, the present invention is using a signal, reflected by the blade, to determine phase and steering of the leaky feeder(s). Multiple leaky feeders can hereby form an array. Each leaky feeder can be coupled with a transmitter unit. Each transmitter can generate an electromagnetic signal, which phase and/or amplitude could be changed. By changing the phases and/or amplitudes of each transmitter, it is possible to form the beam of the leaky feeder (resulting beam by interference). The beam can be steered onto/towards a wind turbine blade, which is in front of the tower/leaky feeder. By detecting the reflected radar signal, it may be possible to determine the position of the beam on the blade. The amplitude of the reflected and received signal may increase, if the beam is moving closer to the blade tip. The blade tip can be detected by a fast decrease in received amplitude, due to the fact, that there is no reflection when the beam swept outside the blade perimeter (end of the blade tip). With noticing this edge in an amplitude diagram, it is possible to determine the position/direction of the beam. The manipulated phase (-offsets) could be stored. The whole calibration could be done in an artificial neural network.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind turbine with an evaluation device in accordance with an exemplary embodiment of the present invention.
Figure 2 shows a leaky feeder in accordance with an exemplary embodiment of the present invention.
Figure 3 shows leaky feeder paths in accordance with an exemplary embodiment of the present invention.
Figure 4 shows a plurality of transmitting leaky feeders at a tower in accordance with an exemplary embodiment of the present invention.
Figure 5 shows an antenna main lobe in case of one transmitting leaky feeder in accordance with an exemplary embodiment of the present invention.
Figure 6 shows an antenna main lobe in case of a plurality of transmitting leaky feeder in accordance with an exemplary embodiment of the present invention.
Figures 7 to 11 respectively show a beam steering along a wind turbine blade in accordance with an exemplary embodiment of the present invention.
Figure 12 shows an artificial intelligence module in accordance with an exemplary embodiment of the present invention.
Figure 13 shows an evaluation device in accordance with an exemplary embodiment of the present invention.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

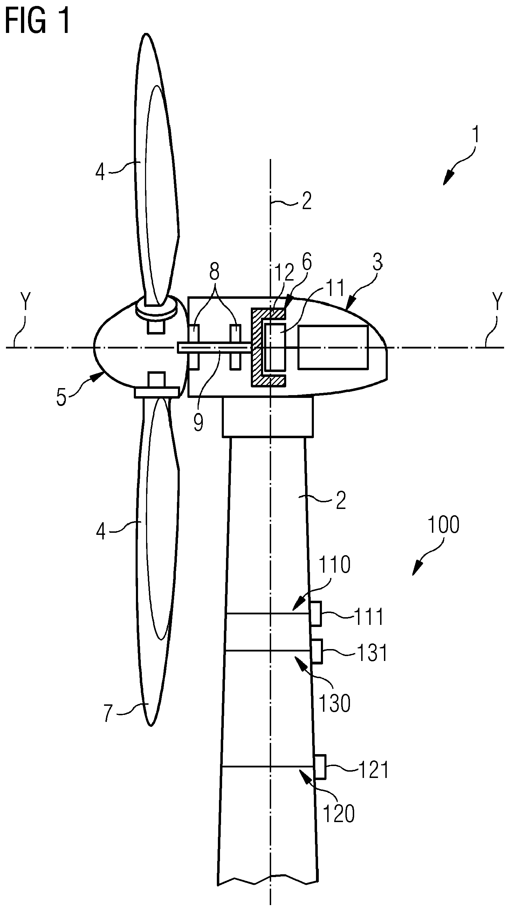

**Figure 1** shows a wind turbine 1 with an evalution device 100 in accordance with an exemplary embodiment of the present invention. The wind turbine 1 comprises a tower 2, which is mounted on a non-depicted fundament. A nacelle 3 is arranged on top of the tower 2. In between the tower 2 and the nacelle 3, a yaw angle adjustment device (not shown) is provided, which is capable of rotating the nacelle around a vertical yaw axis Z.

The wind turbine 1 further comprises a wind rotor 5 having one or more rotational blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y.

The blades 4 extend radially with respect to the rotational axis Y. The wind turbine 1 comprises an electric generator 6 having a stator 11 and a rotor 12. The rotor 12 is rotatable with respect to the stator 11 about the rotational axis Y to generate electrical power. The electric generator 6 and the generation of electrical power through the present invention is not a specific object of the present invention and therefore not described in further detail.

The evaluation device 100 is partially arranged at the tower 2 and comprises a transmitting leaky feeder 110, a further transmitting leaky feeder 130, and a receiving leaky feeder 120, each of which is circumferentially bend around the tower 2 in this example. The leaky feeders 110, 120, 130 are arranged essentially at the same vertical height (z) of the tower as the tip 7 of the blade 4. The transmitting leaky feeder 110 is coupled to a transmitter unit 111, the further transmitting leaky feeder 130 is coupled to a further transmitter unit 131, and the receiving leaky feeder 120 is coupled to a receiver unit 121.

**Figure 2** shows a leaky feeder 110 in accordance with an exemplary embodiment of the present invention. In this example, the leaky feeder 110 is configured as a leaky coaxial cable. The center of the leaky feeder is a conductor 116, e.g. a copper cable/wire. The conductor 116 is embedded (encapsulated) in a dielectric material layer 117. Further, around the dielectric material layer 117, there is arranged a shielding layer (outer conductor) 118, e.g. a metal/copper layer. A plurality of slots (apertures) 112 is formed in said shielding layer 118. Thereby, it is enabled to transmit/receive electromagnetic signal along the length of the leaky feeder 110. Since the transmission/reception takes (essentially) only place at the slots, it is termed "leaking". Optionally, a protection layer (cable jacket), in particular a dielectric such as rubber material, more in particular with low optical coverage, can be arranged around the shielding layer 118. The slots 112 are located with predefined positions and distances between each other. The first slot is the outermost slot with respect to the input or output of the leaky feeder 110. For example, an elongated conductor (not shown in this Figure) can be connected to the leaky feeder 110 in closest proximity to the first slot.

**Figure 3** shows two leaky feeder paths 125 in accordance with an exemplary embodiment of the present invention. A first leaky feeder 110 (being a transmitting leaky feeder) is arranged at a wind turbine tower 2 and coupled at its extremities to communication-associated devices 131, in this example between a transmitter unit 111 and a termination 133a, e.g. a resistor. The connection to the transmitter unit 111 is realized by an elongated conductor that serves as a lead-in cable, while the leaky feeder 110 is connected to the termination 133 by a further elongated conductor that serves as a lead-out cable. In a comparable manner, a further leaky feeder (a receiving leaky feeder) 120 is connected through a lead-in cable to a termination 133 and through a lead-out cable to a receiver unit 121.

The transmitter 111 provides an electromagnetic signal through the lead-in cable to the leaky feeder 110, which transmits said signal along its entire length. In this specific example, the transmitted signal is reflected by a blade 4 of the wind turbine 1. Said reflected signal is then received by the further leaky feeder 120 at a specific position. The further leaky feeder 120 provides the received signal through the lead-out cable to the receiver 121. In this configuration, a radar can be realized that can be used to inspect/monitor the wind turbine blade 4.

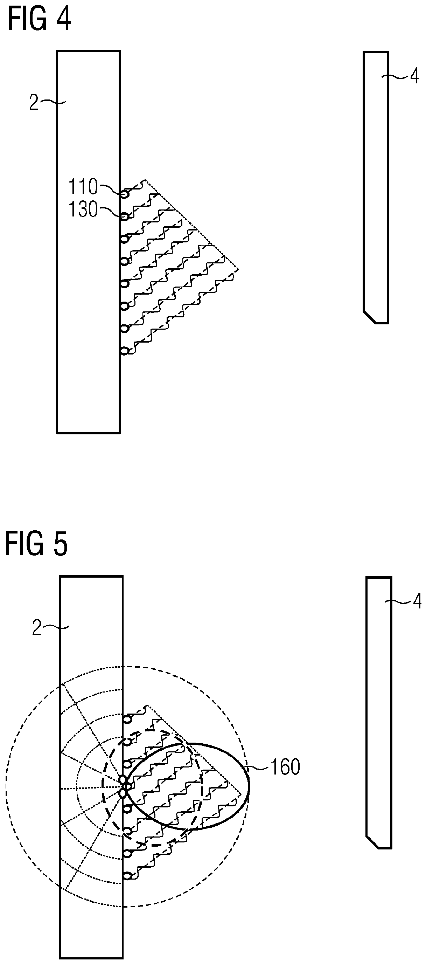

**Figure 4** shows a plurality of transmitting leaky feeders 110, 130 arranged in form of an array at a tower 2 in accordance with an exemplary embodiment of the present invention. One of the wind turbine blades 4 is stopped and oriented in parallel to the main extension of the tower (along z axis). The plurality of transmitting leaky feeders 110 are connected to a common processing device 150. Each single leaky feeder 110, 130 is fed by a transmitter unit. Each transmitter unit 111 can variate the output power (amplitude) and/or the phase (offset).

**Figure 5** shows a situation, where only one leaky feeder 110 is in transmitting mode, the others are turned off. The horizontal beam angle is 0° in this case. There can be no interference and the antenna main lobe 160 comprises a normal shape.

**Figure 6** shows a situation, where multiple leaky feeders 110, 130 are "on", i.e. transmitting, in accordance with an exemplary embodiment of the present invention. The signal beam is now formed, and the beam angle (see antenna main lobe 160) is narrowed.

**Figures 7 to 11** respectively show a beam steering 170 along a wind turbine blade 4 in accordance with an exemplary embodiment of the present invention. From Figure 7 to Figure 11, the phases are manipulated (adapted), while the amplitudes are kept constant. In each Figure, there is shown a diagram to illustrate the amplitude determined at the receiver (y-axis) in relation to time and phase change (x-axis). Due to interferences of the plurality of transmitted signals, a steering of a signal beam 165 is enabled, shown here as the antenna main lobe 160.

Figures 7 to 9: the signal beam 165 is steered 170 along the blade 4 from top to bottom and over the tip 7. The amplitude of the received signal is constantly increasing.

Figure 10: the signal beam 170 is steered over the blade tip 7, so that the amplitude instantly falls (after a maximum at the blade tip). Figure 11 shows the moment where the amplitude is at maximum.

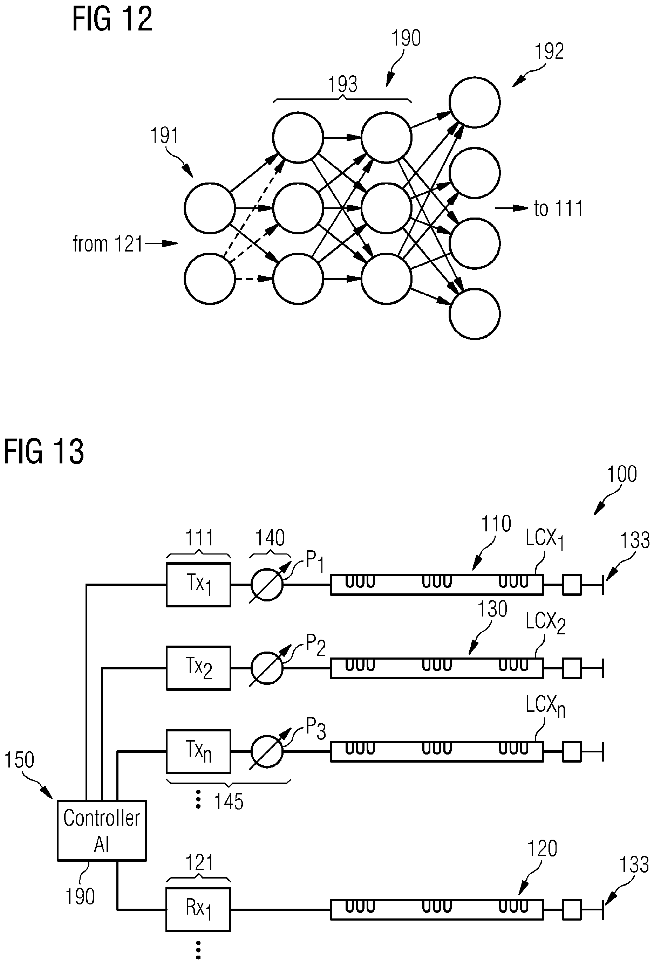

**Figure 12** shows an artificial intelligence (AI) module 190 in accordance with an exemplary embodiment of the present invention. In this example, the AI module 190 is configured as a neuronal network and receives the output of the receiver unit 121 (processed received signal) as input at the input layers 191. The output layer 192 of the AI module 190 is input to the transmitter unit 111. In between the input layer 191 and the output layer 192, there is a plurality of further (deeper, hidden) layers 193. Using the AI module 190, the phase and/or amplitude of the transmitted signal is adapted, in particular for specifically steering the signal beam.

In a specific example, at least one receiving leaky feeder is used as input of the network. Then there might be at least one hidden layer and output nodes are used as input for the phase offset in the transmitter. One neural network output is connected to one transmitter phase shifter. After training the neural network, the results of the training could be stored and reused.

**Figure 13** shows an evaluation device 100 in accordance with an exemplary embodiment of the present invention. The evaluation device 100 comprises a plurality of transmitter units 111, each coupled to a respective transmitting leaky feeder 110, 130. In this example, each leaky feeder 110, 130 is terminated by a termination 133 (specific wave impedance). In between transmitter unit 111 and leaky feeder 110, 130, there is respectively arranged a phase shifter module 140. In an example, a phase shifter module can be integrated into the corresponding transmitter unit 145.

The evaluation device 100 further comprises a receiver unit 121, connected to a receiving leaky feeder 120, also terminated by a termination 133. The plurality of transmitter units 111 and the receiver unit 121 are connected to a processing device 150, which can contain the above described AI module 190.

It should be noted that the term "comprising" does not exclude other elements or steps, and the use of the item "a" does not exclude multiplicity. Elements described in conjunction with various embodiments can also be combined. It should also be noted that reference signs in the claims should not be interpreted as limiting the scope of the claims.

Independent of the grammatical term usage, individuals with male, female or other gender identities are included within the term.

## Claims

1. A wind turbine (1) comprising:
a tower (2);
a nacelle (3), coupled to the tower (1);
a wind rotor (5), which is arranged at the nacelle (3), and which comprises at least one blade (4); and
an evaluation device (100), comprising:
a transmitting leaky feeder (110), coupled to a transmitter (111), and configured to transmit an electromagnetic signal;
a receiving leaky feeder (120), coupled to a receiver (121), and configured to receive a reflection of the electromagnetic signal;
a further leaky feeder (130), coupled to a communication associated device (131), and configured to transmit and/or receive a further electromagnetic signal; and
a processing device (150), configured to adapt the phase and/or the amplitude of at least one of the signal and the further signal to thereby steer a signal beam (165) that results from interference of the signal and the further signal, and
perform an evaluation operation based on the steering of the signal beam (165).

2. The wind turbine (1) according to claim 1, wherein the evaluation operation further comprises:
stop rotation of the at least one blade (4).

3. The wind turbine (1) according to claim 2, wherein the evaluation operation further comprises:
align the at least one blade (4) with the tower (2) extension direction, in particular align the at least one blade (4) in the vertical direction (z).

4. The wind turbine (1) according to any one of the preceding claims, wherein the processing device (150) is further configured to:
adapt the phase, so that the amplitude of the signal and/or further signal received at the receiver (121) is maximized, in particular determine the maximal amplitude to calibrate a focus point.

5. The wind turbine (1) according to any one of the preceding claims, wherein the processing device (150) is further configured to:
steer the signal beam (165) at least partially along the at least one blade (4).

6. The wind turbine (1) according to claim 5, wherein the processing device (150) is further configured to:
steer the signal beam (165) over the tip (7) and/or the edge of the at least one blade (4).

7. The wind turbine (1) according to any one of the preceding claims,
wherein a phase shift functionality and/or an amplitude modulation functionality is implemented in the transmitter (111), in particular in software; and/or
wherein the wind turbine (1) further comprising at least one phase shifter device (140) and/or amplitude modulation device.

8. The wind turbine (1) according to any one of the preceding claims, wherein the processing device (150) is further configured to:
keep the amplitude constant, when the phase is shifted;
and/or
keep the phase constant, when the amplitude is modulated.

9. The wind turbine (1) according to any one of the preceding claims,
wherein the communication-associated device (131) comprises at least one of a further transmitter (131), a further receiver, a phase-shift device, an amplitude-modulation device; and/or
wherein the receiving leaky feeder (120) is further configured to receive the further signal.

10. The wind turbine (1) according to any one of the preceding claims, further comprising:
an artificial intelligence, AI, module (190), in particular implemented in the processing device (150), configured to control or regulate the phase shift and/or the amplitude modulation.

11. The wind turbine (1) according to claim 10,
wherein the received signal is used an in input (191) for the AI module (190), and/or
wherein the transmitted signal is an output (192) of the AI module (190), and/or
wherein the AI module (190) comprises a neural network, in particular with at least one hidden layer (193).

12. The wind turbine (1) according to any one of the preceding claims, wherein the evaluation operation relates to at least one of: distance between blade and tower, location of blade tip, location of blade edge, quality of blade, length of a leaky feeder conductor, a phase angle, the location of one or more leaky feeder slots, signal path test, position of signal beam on blade.

13. A method of performing a evaluation operation with respect to a wind turbine (1), the method comprising:
transmitting an electromagnetic signal by a transmitting leaky feeder (110);
receiving a reflection of the electromagnetic signal by a receiving leaky feeder (120);
transmitting and/or receiving a further electromagnetic signal by a further leaky feeder (130);
adapting the phase and/or the amplitude of at least one of the signal and the further signal, thereby
steering (170) a signal beam (165) that results from interference of the signal and the further signal, and
performing the evaluation operation based on the steering (170) of the signal beam (165).

14. The method according to claim 13, further comprising:
stopping a rotation of the wind turbine (1); and/or
aligning a blade (4) of the wind turbine (1) with the tower (2) of the wind turbine (1).

15. The method according to claim 13 or 14, further comprising:
sweeping the signal beam (165) along the wind turbine (1) blade (4), in particular over the tip (7) and/or the edge of the blade (4); and/or
inspecting the at least one blade (4) during wind turbine operation, in particular by the signal beam (165).
